# EUROPEAN PATENT APPLICATION

(11) **EP 4 763 488 A1**
(43) Date of publication of application: **24.06.2026**
(21) Application number: 24307167.7
(22) Date of filing: 18.12.2024
(51) Int. Cl.: B29D 11/00, B29C 64/112, B29C 64/393

(54) **METHOD FOR ADDITIVELY MANUFACTURING AN OPHTHALMIC DEVICE AND MANUFACTURING SYSTEM CONFIGURED TO CARRY OUT SUCH A METHOD**

(71) Applicant: Essilor International, 94220 Charenton-Le-Pont (FR)
(72) Inventor: BEN CHEIKH, Ilhem, 94000 CRETEIL (FR)
(74) Representative: Santarelli

(57) **Abstract**

The disclosure provides a method for additively manufacturing an ophthalmic device delimited by a targeted curved geometrical envelope, thanks to at least one inkjet print head having at least one nozzle, the method comprising inkjet printing a first layer, the first layer being divided into several first sub-layers, and inkjet printing a second layer above the first layer, the second layer being divided into several second sub-layers, wherein a first one of the first sub-layers is disposed and others of the first sub-layers are disposed on and after the first one of the first sub-layers and are each offset from the first sub-layer immediately below by a first determined shifting distance in a first direction inside the targeted curved geometrical envelope, and wherein a first one of the second sub-layers is disposed on the first layer and is offset from the first one of the first sub-layers by a second determined shifting distance lower than the first determined shifting distance and in the first direction inside the targeted curved geometrical envelope; whereby the first one of the second sub-layers at least partially covers at least one of the others of the first sub-layers.

## Description

### FIELD OF THE DISCLOSURE

The disclosure relates to a method for additively manufacturing an ophthalmic device and a manufacturing system configured to carry out such a method.

The disclosure also relates to a command and control unit including system elements configured to run a computer program in order to implement steps of the additive manufacturing method, and to a manufacturing system comprising such a command and control unit and configured for carrying out steps of such a method.

The disclosure also relates to a computer program including instructions configured to implement such an additive manufacturing method, when said computer program is run by a computer, and to a client-server communication interface for transferring to a remote computer at least manufacturing data which are determined by a computer program that implements steps of the additive manufacturing method, when said computer program is run in a command and control unit, the remote computer implementing the other steps of such method.

### BACKGROUND ART

It is known to use an additive manufacturing technology to manufacture an ophthalmic device, such as spectacle lenses.

Known methods for additively manufacturing of ophthalmic lenses, such as stereolithography and its variants, comprise curing steps and layering steps which are performed successively in a manufacturing system which comprises a curing device, a layering device and a building platform located in relation to a vat filled with a predetermined material.

For instance, each ophthalmic lens is built layer by layer on the building platform which is movable relative to the vat including a volume of the predetermined material. The building platform is located in a predetermined position, the curing device including an irradiation source performs the curing step of a first layer of material, the layering device performs the layering step at least thanks to a displacement of the building platform so that a novel layer of material having a predetermined thickness can be cured, etc.

In other words, in such known methods, a curing step is performed on a layer which is for instance liquid for the plurality of ophthalmic lenses to be manufactured on the building platform. The liquid layer is thus hardened and next a layering step is performed for forming a new liquid layer on the previous hardened layer of the plurality of ophthalmic lenses to be manufactured.

Another method of additive manufacturing may comprise successively disposing droplets of liquid material and curing them in order to form layers of material. This method, usually called 3D-printing, or inkjet printing, generally controls the shape of the layers by controlling the position and volume of the disposed droplets whereas the curing step may be global or continuous during printing.

Other additive manufacturing methods may also be used.

In the above methods, a plurality of layers is formed in order to manufactured the ophthalmic device which often comprises at least a curved face, that is to say a face having a determined curvature, which can be simple or complex and in particular spherical and/or toroidal and/or of the freeform type.

However, the layers may have a flat shape and are built so as to follow a targeted geometry of the ophthalmic device, defining in particular an outline thereof, thus generating some features called stair steps at free ends of the layers, close to the outline of the ophthalmic device.

There is thus a need to provide a method for additively manufacturing an ophthalmic device, by inkjet-printing and with limited such stair steps.

In this respect, International application WO 2020/169689 discloses a method for printing a three-dimensional optical component which prevents the formation of such deviations and defects, in particular in sections of small diameter compared to the overall diameter of the optical component.

In particular, in the method of WO 2020/169689, the three-dimensional structure is built up from layers of printing ink which are printed at least partially one above the other in consecutive layer printing steps, wherein a first layer is printed in a first layer printing step and a second layer is printed at least partially on top of the first layer in a second layer printing step, so that the second layer encloses the first layer.

In other words, in document WO 2020/169689, the layers are printed in reverse order, starting with the layer of smallest diameter and continuing with layers of larger diameter. Accordingly, the final layer printed has a large surface area, reducing the probability of defect formation in that layer.

### SUMMARY OF THE DISCLOSURE

The disclosure is directed to a method for additively manufacturing an ophthalmic device, for instance by inkjet-printing, which is simple and convenient to carry out.

The disclosure accordingly provides a method for additively manufacturing an ophthalmic device delimited by a targeted curved geometrical envelope, thanks to at least one inkjet print head having at least one nozzle, the method comprising a step of inkjet printing a first layer, the first layer being divided into several first sub-layers, a step of inkjet printing a second layer above the first layer, the second layer being divided into several second sub-layers, wherein a first one of the first sub-layers is disposed and others of the first sub-layers are disposed on and after the first one of the first sub-layers and are each offset from the first sub-layer immediately below by a first determined shifting distance in a first direction inside the targeted curved geometrical envelope, and wherein a first one of the second sub-layers is disposed on the first layer and is offset from the first one of the first sub-layers by a second determined shifting distance lower than the first determined shifting distance and in the first direction inside the targeted curved geometrical envelope; whereby the first one of the second sub-layers at least partially covers at least one of the others of the first sub-layers.

In the method according to the disclosure, at least the others of the first sub-layers and the first one of the second sub-layers are shifted remote to the first one of the first sub-layers, so that first to create some areas temporarily devoid of material when inkjet printing the first layer and next to cover at least partially said areas when inkjet printing the second layer.

To be noted that the first sub-layers are superimposed and the second sub-layers are also superimposed.

In other words, the areas temporarily devoid of material are made in the first layer in the vicinity of the targeted curved geometrical envelope where stair steps are able to be generated in the prior art, and then the second layer is able to cover and to at least partially fill the areas generated in the first layer with material, so that no stair step occurs.

Therefore, thanks to the method according to the disclosure, it is possible to provide the ophthalmic device with an external curved surface devoid of stair steps, or with reduced stair steps.

In other words, the method according to the disclosure may allow to smooth the external surface of the ophthalmic device and thus to provide, thanks to the technology of 3D-inkjet printing, an ophthalmic device having an external surface as closest as possible to the targeted curved geometrical envelope and also in accordance to a final external surface.

Advantageous and convenient features of the manufacturing method are described below.

The first determined shifting distance is proportional to the second determined shifting distance.

To be noted that the first determined shifting distance is in relation also to the number of the first sub-layers.

The first determined shifting distance is fixed or is variable for all the others of the first sub-layers, depending on a thickness of the first sub-layers and on the targeted curved geometrical envelope.

The second determined shifting distance is equal to or lower than a print resolution distance.

The second determined shifting distance is comprised between around a tenth and around half of the print resolution distance.

The print resolution distance is determined as a function of print properties of the at least one inkjet print head and of a thickness of the layer or sub-layer to inkjet print.

It is to be noted that the first layer has a first determined thickness and the first sub-layers have each a first determined sub-thickness, which is variable or fixed; while the second layer has a second determined thickness and the second sub-layers have each a second determined sub-thickness, which is variable or fixed.

The first one of the first sub-layers is disposed at a first external distance close to an outline of the targeted curved geometrical envelope of the ophthalmic device, and the others of the first sub-layers are disposed at a second external distance remote to the outline of the targeted curved geometrical envelope and greater than the first distance, the second external distance including at least the first determined shifting distance and the print resolution distance.

The first layer comprises a number of others of the first sub-layers offset from the first one of the sub-layers, which is determined as a function of the first determined shifting distance.

The method further comprises a step of inkjet printing a third layer having at least one third sub-layer, wherein others of the second sub-layers are disposed on and after the first one of the second sub-layers and are each offset from the second sub-layer immediately below by a third determined shifting distance in the first direction inside the targeted curved geometrical envelope, the third determined shifting distance being equal to or different to the first determined shifting distance, and wherein the at least one third sub-layer is disposed on the second layer and is offset from the first one of the second sub-layers by a fourth determined shifting distance lower than or equal to the third determined shifting distance and in the first direction inside the targeted curved geometrical envelope; whereby the at least one third sub-layer at least partially covers at least one of the others of the second sub-layers.

Similarly to the above, the first one of the second sub-layers is disposed at a third external distance close to the outline of the targeted curved geometrical envelope of the ophthalmic device, and the others of the second sub-layers are disposed at a fourth external distance remote to the outline of the targeted curved geometrical envelope and greater than the third distance, the fourth external distance including at least the third determined shifting distance and the print resolution distance.

Other advantageous and convenient features of the manufacturing method are described below.

The method may comprise a step of curing the first layer as a whole before the step of inkjet printing of the second layer.

In alternative, the method may comprise a step of curing the first sub-layers at least partially successively before the step of inkjet printing of the second layer.

The method may comprise a step of inkjet printing at least a filtering layer onto an outermost layer and having a thickness comprised between 1 µm and 100 µm, so that to act as a leveling layer and to conform closest to the targeted curved geometrical envelope.

The method may comprise a step of generating and/or providing a manufacturing file comprising parameters including a plurality of images, each image being representative of a network of voxels representative of a distribution of droplets of material for inkjet printing at least partially a layer and/or a sub-layer of the first layer and/or of the second layer of the ophthalmic device and being used for activating and deactivating the at least one nozzle of the at least one inkjet print head.

The manufacturing file may include geometrical characteristics of a sliced ophthalmic device which are representative of the layers to be built.

A slice may comprise one or several images, each representative of the voxels distribution to be ejected by the at least one nozzle.

In the voxels distribution, the voxels may have determined sizes, determined heights, determined widths, and thus determined volumes, the voxels being similar or being different in the image(s).

The method may comprise a step of inkjet printing the first layer and the second layer based on the provided and/or generated manufacturing file.

The step of inkjet printing the first layer and the second layer may be performed with print properties which can be fixed or variable during inkjet printing.

The print properties may comprise an ink material and/or a drop density and/or a drop volume and/or a drop viscosity and/or a drop speed ejection, equated to a firing speed.

The print properties may also comprise a print head resolution corresponding to a radial resolution of the print head which is defined at least as a function of the number and the arrangement of the nozzles.

The manufacturing file may comprise further parameters including curing characteristics so as to perform the curing step as described above.

The manufacturing file may comprise parameters further including positioning data of the ophthalmic device and/or of the at least one inkjet print head, which are determined depending on the at least one nozzle and/or on the curvature geometrical characteristics of the at least one curved face and/or on the geometrical characteristics of the curved supporting surface.

The method may comprise a step of positioning the ophthalmic device and/or the at least one inkjet print head based on the manufacturing file.

The disclosure also provides, according to a second aspect, a command and control unit including system elements configured to run a computer program in order to additively manufacture an ophthalmic device thanks to at least one inkjet print head having at least one nozzle, by providing a manufacturing file comprising parameters including a plurality of images, at least one image being defined by a network of voxels representative of a distribution of droplets of material for inkjet printing of at least partially a first layer divided into several first sub-layers and for inkjet printing of at least partially a second layer above the first layer, the second layer being divided into several second sub-layers, each image being used for activating and deactivating the at least one nozzle of the at least one inkjet print head; wherein a first one of the first sub-layers is disposed and others of the first sub-layers are disposed on and after the first one of the first sub-layers and are each offset from the first sub-layer immediately below by a first determined shifting distance in a first direction inside the targeted curved geometrical envelope, and wherein a first one of the second sub-layers is disposed on the first layer and is offset from the first one of the first sub-layers by a second determined shifting distance lower than the first determined shifting distance and in the first direction inside the targeted curved geometrical envelope; whereby the first one of the second sub-layers at least partially covers at least one of the others of the first sub-layers.

The disclosure further provides, according to a third aspect, a manufacturing system comprising an inkjet printer comprising at least one inkjet print head having at least one nozzle and a command and control unit, the system being configured for additively manufacturing an ophthalmic device by providing to the inkjet printer a manufacturing file comprising parameters including a plurality of images, at least one image being defined by a network of voxels representative of a distribution of droplets of material for inkjet printing of at least partially a first layer divided into several first sub-layers and for inkjet printing of at least partially a second layer above the first layer, the second layer being divided into several second sub-layers, each image being used for activating and deactivating the at least one nozzle of the at least one inkjet print head; wherein a first one of the first sub-layers is disposed and others of the first sub-layers are disposed on and after the first one of the first sub-layers and are each offset from the first sub-layer immediately below by a first determined shifting distance in a first direction inside the targeted curved geometrical envelope, and wherein a first one of the second sub-layers is disposed on the first layer and is offset from the first one of the first sub-layers by a second determined shifting distance lower than the first determined shifting distance and in the first direction inside the targeted curved geometrical envelope; whereby the first one of the second sub-layers at least partially covers at least one of the others of the first sub-layers.

The disclosure also provides, according to a fourth aspect, a computer program including instructions configured to cause a manufacturing system and/or a command and control unit to additively manufacture an ophthalmic device thanks to at least one inkjet print head having at least one nozzle, by determining a manufacturing file comprising parameters including a plurality of images, at least one image being defined by a network of voxels representative of a distribution of droplets of material for inkjet printing of at least partially a first layer divided into several first sub-layers and for inkjet printing of at least partially a second layer above the first layer, the second layer being divided into several second sub-layers, each image being used for activating and deactivating the at least one nozzle of the at least one inkjet print head; wherein a first one of the first sub-layers is disposed and others of the first sub-layers are disposed on and after the first one of the first sub-layers and are each offset from the first sub-layer immediately below by a first determined shifting distance in a first direction inside the targeted curved geometrical envelope, and wherein a first one of the second sub-layers is disposed on the first layer and is offset from the first one of the first sub-layers by a second determined shifting distance lower than the first determined shifting distance and in the first direction inside the targeted curved geometrical envelope; whereby the first one of the second sub-layers at least partially covers at least one of the others of the first sub-layers, when said computer program is run by a computer.

The disclosure further provides, according to a fifth aspect, a client-server communication interface for transferring to a remote computer at least a manufacturing file for additively manufacturing an ophthalmic device, the manufacturing file being determined by a computer program when said computer program is run in a command and control unit of the client-server communication interface and comprising parameters including first images being representative of a distribution of voxels or a distribution of droplets for inkjet printing at least partially a first layer divided into several first sub-layers and for inkjet printing at least partially a second layer above the first layer, the second layer being divided into several second sub-layers, each image being used for activating and deactivating the at least one nozzle of the at least one inkjet print head; wherein a first one of the first sub-layers is disposed and others of the first sub-layers are disposed on and after the first one of the first sub-layers and are each offset from the first sub-layer immediately below by a first determined shifting distance in a first direction inside the targeted curved geometrical envelope, and wherein a first one of the second sub-layers is disposed on the first layer and is offset from the first one of the first sub-layers by a second determined shifting distance lower than the first determined shifting distance and in the first direction inside the targeted curved geometrical envelope; whereby the first one of the second sub-layers at least partially covers at least one of the others of the first sub-layers, and the remote computer being configured to cause a manufacturing system to implement inkjet printing the first layer and the second layer of the ophthalmic device.

### BRIEF DESCRIPTION OF THE DRAWINGS

The description of the disclosure now continues with a detailed description of embodiments given hereinafter by way of non-limiting example and with reference to the appended drawings.
Figure 1 is a schematic view of a manufacturing system configured to carry out a method for additively manufacturing ophthalmic devices.
Figure 2 diagrammatically shows a client-server communication interface comprising system parts configured for transferring at least one manufacturing file determined by the method according to the disclosure to a remote data processing system.
Figure 3 shows another view of the manufacturing system illustrated in Figure 1.
Figure 4 is a schematic view showing some steps for additively manufacturing ophthalmic devices thanks to an inkjet printer of the manufacturing system.
Figure 5 is a schematic view showing some layers divided into sub-layers offset ones relative the others, according to an embodiment.
Figure 6 is another schematic view showing an alternative embodiment of some layers divided into sub-layers offset ones relative the others.
Figure 7 is a block diagram showing steps of the method for additively manufacturing an ophthalmic device according to the disclosure.
Figure 8 is a block diagram showing further steps of the method.

### DETAILED DESCRIPTION OF EXAMPLE EMBODIMENTS

The disclosure is directed to a method and a manufacturing system for additively manufacturing by inkjet printing an ophthalmic device.

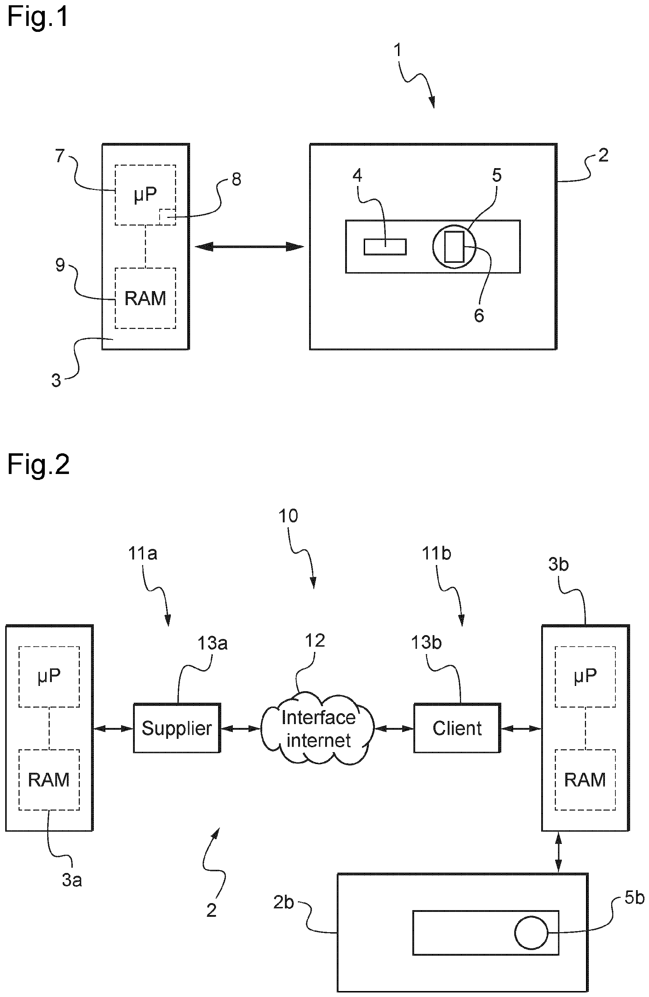

Figure 1 illustrates schematically a manufacturing system 1 configured to carry out a method for additively manufacturing ophthalmic devices 5, such as for instance spectacle lenses.

The ophthalmic device 5 has for instance a predetermined optical function and is made from at least one predetermined material.

The manufacturing system 1 comprises an additive unit also called additive manufacturing module, which is here formed by an inkjet printer 2 configured for projecting volumes of the predetermined material in the shape of droplets.

The predetermined material is suitable for manufacturing ophthalmic devices 2, such as a liquid resin for making eyeglasses.

The manufacturing system 1 further comprises system parts generally formed by at least one command and control unit 3 configured to communicate with a data processing system (or control unit) of the inkjet printer 2 and configured to run a computer program having instructions configured to implement at least some steps of the method, when said computer program is run by a computer.

The inkjet printer 2 comprises one or a plurality of inkjet print heads 6 configured to project the predetermined material, for instance as droplets or in jets of droplets, and at least one curing device 4 including for instance an irradiation source configured for curing the droplets of material previously projected.

The inkjet print heads 6 may comprise a plurality of nozzles located in a determined arrangement, for instance along a predetermined length and a predetermined width, so that to define one or a plurality of groups of adjacent nozzles.

The inkjet printer 2 may comprise a data processing system or a control unit (not shown) configured for controlling at least the inkjet print heads 6 and the curing device 4.

The command and control unit 3 comprises a microprocessor 7 having a memory 8, in particular a non-volatile memory, allowing it to load and store the computer program, also called software, which when it is executed in the microprocessor 7, allows the implementation of the method according to the disclosure and thus the use of the inkjet printer 2.

This non-volatile memory 8 is for example of the ROM ("read only memory") type.

The command and control unit 3 further comprises a memory 9, in particular a volatile memory, allowing data to be stored during the execution of the software and the implementation of the method.

This volatile memory 9 is for example of the RAM or EEPROM type (respectively "random access memory" and "electrically erasable programmable read only memory").

The command and control unit 3 may be only at least partially integrated into the inkjet printer 2. In other words, the command and control unit 3 may be arranged in part, or in whole, outside the inkjet printer 2. In particular, the command and control unit 3 may comprise one or a plurality of command and control modules located inside and/or outside the inkjet printer 2.

The inkjet printer 2 is here configured at least for the inkjet printing of the ophthalmic device 5, layer by layer, each layer being formed by a volume of the predetermined material, and for curing the volumes of material in order to polymerize and harden the layers and thus to form the ophthalmic device 5.

At least one or several of the layers is here divided into sub-layers which are at least partially superimposed one to each other.

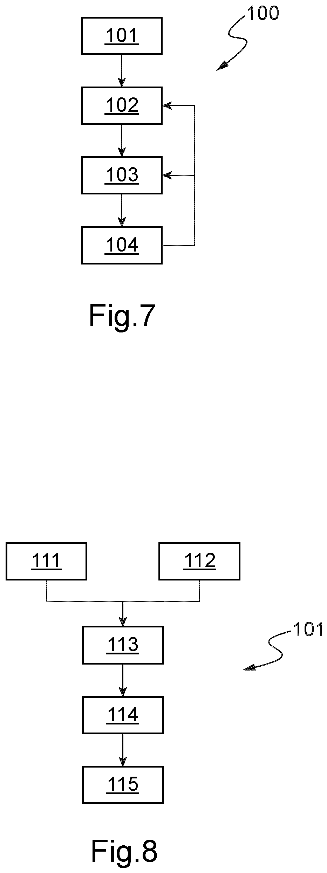

In this respect, the command and control unit 3 is also configured to command and control at least some of the steps of an additive manufacturing method described below at least in reference to Figures 7 and 8.

Figure 2 shows a client-server communication interface 10 comprising for instance a so-called supplier-side 11 a and another, so-called client-side 11b, and these two sides communicating via for instance an internet interface 12.

The supplier-side 11a comprises a supplier server 13a linked to a data processing system or a command and control unit 3a of the same type as that in Figure 1, this server 13a being configured to communicate with the internet interface 12.

The client-side 11b also comprises a client server 13b which is configured to communicate with the internet interface 12, and which is linked to a data processing system or a command and control unit 3b of the same type as that of the supplier-side .

In addition, the command and control unit 3b on the client-side 11b is linked to an inkjet printer 2b of the same type as that in Figure 1, and is configured to additively manufacture the layers divided into sub-layers of the ophthalmic device (as detailed below).

For instance, the command and control unit 3a on the client-side 11b is configured for receiving some parameters about the ophthalmic device to be additively manufactured, including geometrical characteristics of the layers and sub-layers of the ophthalmic device.

For instance, the parameters about the ophthalmic device may include geometrical characteristics, including a targeted curved geometrical envelope of the ophthalmic device, some shifting distances in a first direction inside the targeted curved geometrical envelope of the sub-layers of the layers to be inkjet print, and/or optical function, which may include a 3D file representative of the ophthalmic device (such as CAD files, STL files or other) and/or images defined by networks of voxels representative of a distribution of droplets of material for inkjet printing the layers and sub-layers of the ophthalmic device and used for activating and deactivating the nozzles of the inkjet print head(s), and/or other ophthalmic properties of an ophthalmic surface of the ophthalmic device 5b intended to be manufactured, and/or at least one information representative of intrinsic parameter of a material of the ophthalmic device.

For instance, the command and control unit 3a on the client-side 11b is configured for receiving also some parameters about the inkjet print heads, including information representative of the status of each print head, such as a number of nozzles and/or a geometrical arrangement of the nozzles.

The command and control unit 3b on the client-side 11b, using the internet interface 12 and both client server 13b and supplier server 13a, sends at least some data received by the command and control unit 3b on the client-side 11b, to the command and control unit 3a on the supplier-side 11a for the determination of a manufacturing file representative of operational parameters, including images defined by networks of voxels each representative of the distribution of droplets of material for inkjet printing the sub-layers of the layers of the ophthalmic device 5, the networks of voxels being determined by taking into account a stair step issue (as also explained below).

The command and control unit 3a on the supplier-side 11a executes the computer program that it contains in order to determine the manufacturing file.

Using the supplier server 13a and the internet interface 12, the command and control unit 3a on the supplier-side 11a sends the manufacturing file to the command and control unit 3b on the client-side 11b.

The command and control unit 3b on the client-side 11b is here configured to execute software for implementing the other steps of the manufacturing method for manufacturing by inkjet printing the ophthalmic device thanks to the inkjet printer 2b.

In an alternative embodiment, a step of determining the manufacturing file can be carried out by the command and control unit 3b on the client-side 11b.

In another alternative embodiment, the inkjet printer 2b can be located on the supplier-side 11a so that the command and control unit 3a on the supplier-side 11a is further configured to inkjet print the ophthalmic device.

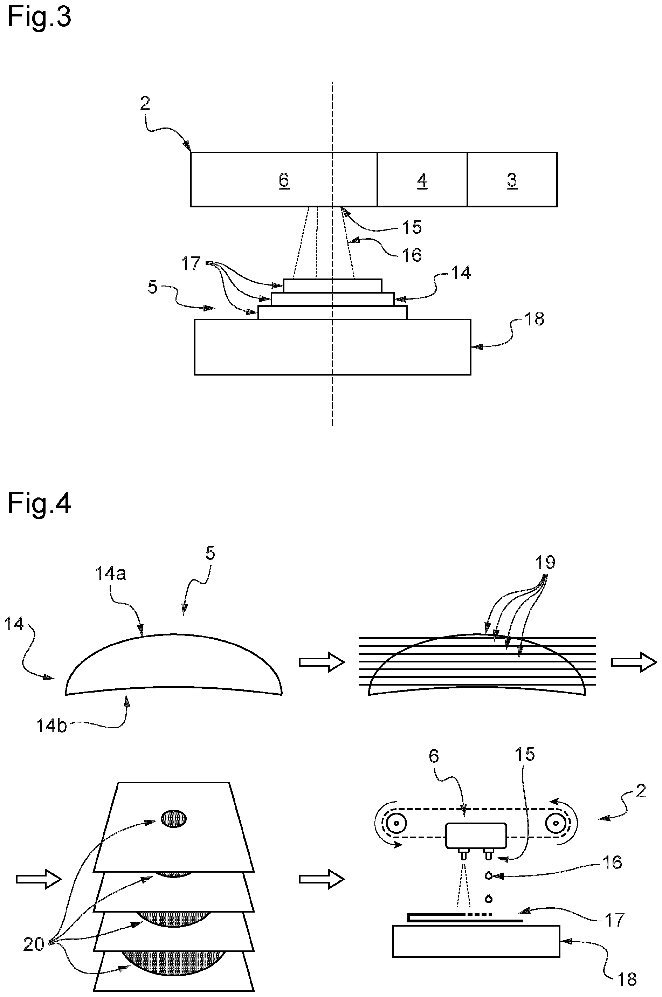

Figure 3 illustrates schematically the inkjet printer 2 which carries out the method for additively manufacturing the ophthalmic device 5 formed layers 17 and delimited by an external surface 14, equated to a curved geometrical envelope.

The inkjet print heads 6 of the inkjet printer 2 have each a plurality of nozzles 15 from which the predetermined material is projected in jets of droplets 16, or stream, to form the curved layers 17 of the ophthalmic device 5, which are then cured by the curing device 4.

A jet of droplets, or stream, includes droplets which can be considered as being a volume of at least one material devoid of tail or satellite, whether such tail or satellite actually happens.

Each print head 6 has a predetermined number of nozzle(s) 15 and a predetermined arrangement thereof. The nozzles 15 can be activated or deactivated.

For instance, each inkjet print head 6 may comprise nozzles 15 arranged in juxtaposed rows thus defining a predetermined length and a predetermined width.

The command and control unit 3 may also be configured to command and control the inkjet print heads 6 and in particular, a print head resolution corresponding to a radial resolution of the inkjet print heads 6 which is defined at least as a function of the number and the arrangement of the nozzles 15.

The command and control unit 3 may be configured to command and control activation and/or deactivation of each nozzle 15 and also each nozzle firing frequency if any.

The nozzle firing frequency can be variable or fixed.

The nozzle firing frequency may depend at least on geometrical characteristics of the ophthalmic device 5 to be manufactured and/or on the location, including for instance tilting and radial shifting relative to a manufacturing axis MA, of the inkjet print heads 6.

The inkjet printer 2 is here located on an upper side of the support member 18 and is configured to build successively the superimposed layers 17 on the support member 18.

The command and control unit 3 may be configured to locate the inkjet print heads 6 at a distance value selected among a plurality of distance values from the support member 18.

The distance value is comprised between a minimum height according to which the predetermined material is able to form droplets and a maximum height according to which the droplets of predetermined material are disposed accurately on the support member 18.

The support member 18 can be able to rotate around a rotation axis corresponding to the manufacturing axis MA and the inkjet print heads 6 and the support member 18 can be able to be inclined one relative to each other and/or the inkjet print heads 6 can be able to be inclined relative to the manufacturing axis MA.

In this respect, the command and control unit 3 may also be configured to command and control a tilt angle of the inkjet print heads 6 and the support member 18 one relative to each other, and a rotation speed of the support member 18 around the manufacturing axis MA, if any.

In addition, the command and control unit 3 may be configured to command and control a print resolution of the inkjet print heads 6, which comprises a process resolution corresponding to an angular resolution which is defined at least as a function of nozzles firing frequency, and the print head resolution as defined above.

As stated above, the inkjet printer 2 is configured to perform inkjet printing of the layers 17 thanks to parameters from the manufacturing file, thus defining a so-called sliced ophthalmic device 5, and in particular the plurality of images each representative of the determined networks of voxels.

To be noted that each layer 17 may have sub-layers which may each correspond to one or several images.

Figure 4 shows schematically slicing of the ophthalmic device 5 to be manufactured.

In particular, the ophthalmic device 5 has its external surface 14, equated to the curved geometrical envelope, which is defined by a first face 14a, also-called front face which is here convex, and a second face 14b, also-called back face which is here concave and opposite to the first face 14a.

The ophthalmic device 5 is at least partly divided into slices 19 from the second face 14b to the first face 14a.

To be noted also that the slices 19 can vary in thickness one from the other, the slices 19 may also have a variable individual thickness, the slices 19 can be flat or curved or having any needed "free form".

To be noted also that the thickness of the slices 19 may depend on print resolution(s) of the inkjet print head(s).

In the case the ophthalmic device 5 is entirely built by inkjet printing on the support member 18, the slices 19 form the entire ophthalmic device 5, and the support member 18 is then removed.

In an alternative, the ophthalmic device 5 is divided into slices 19 for at least a part between the second face 14b to the first face 14a, in particular in the case where only a part of the ophthalmic device 5 is built by inkjet printing. In this respect, the slices 19 are built over the support member 18 which is a part of the ophthalmic device 5. The support member 18 is thus a substrate which forms a starting optical element of the ophthalmic device 5.

The slices 19 are thus representative of both the sub-layers of the layers 17 and the images 20.

Each sub-layer can thus be defined by one or a plurality of images 20, depending on print properties and/or on the print resolution and/or on the process resolution defined above.

In particular, each slice 19 may comprise one or several planar images 20, each representative of the material distribution to be ejected in jets of droplets 16 by the selected nozzles 15 of the inkjet print heads 6.

Indeed, each image 20 is used for activating and deactivating at least some nozzles 15 of the inkjet print heads 6.

It is to be noted that the image is planar even if the slice is flat or curved.

It is to be noted also that the images 20 can be determined thanks to at least one mathematical function such as linear, power, polynomial, exponential, logarithmic, sinusoidal, etc., used alone or in combination.

In addition, in the voxels network which defines the image 20, the voxels may have determined sizes, determined heights, determined widths, and thus determined volumes, the voxels being similar or being different in each image, reminding that the network of voxels is representative of the distribution of droplets of material.

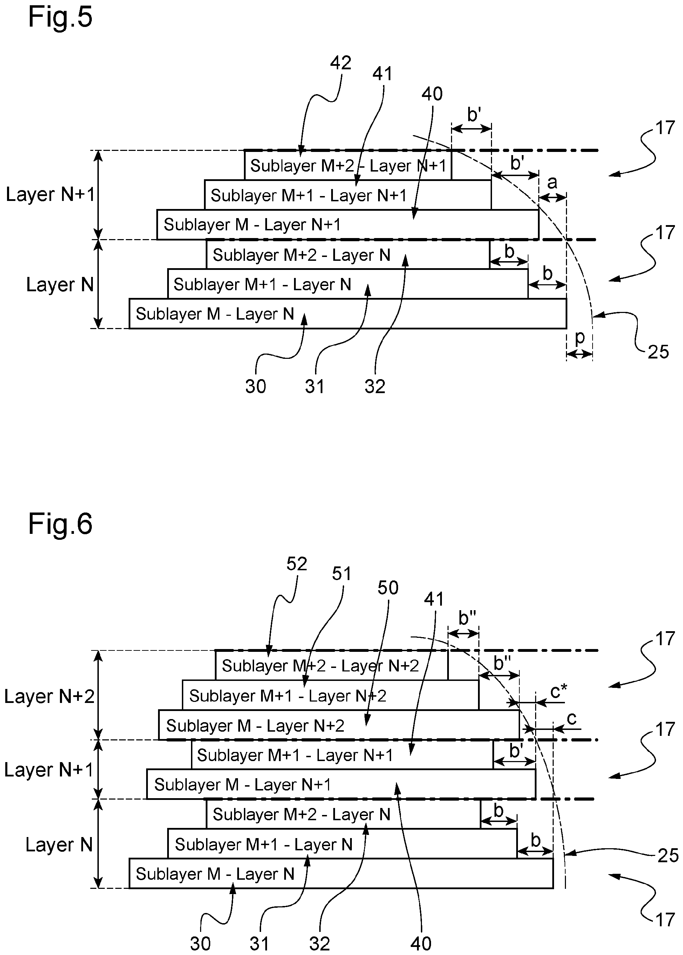

Figure 5 shows first sub-layers 30-32 and second sub-layers 40-42 offset ones relative the others, obtained from the slicing in Figure 4 for the inkjet printing of two layers, namely a first layer 17 having the three first sub-layers 30-32 and a second layer 17 having the three second sub-layers 40-42.

The first layer 17 is referenced "Layer N" while the second layer 17 is referenced "Layer N+1" in Figure 5, the second layer being disposed onto the first layer.

The three first sub-layers 30, 31 and 32 are respectively superimposed and referenced "Sublayer M - Layer N", "Sublayer M+1 - Layer N" and "Sublayer

M+2 - Layer N"; while the three second sub-layers 40, 41 and 42 are respectively superimposed and referenced "Sublayer M - Layer N+1", "Sublayer M+1 - Layer N+1" and "Sublayer M+2 - Layer N+1" in Figure 5.

The ophthalmic device 5 is here delimited by a targeted curved geometrical envelope 25.

The first one of the first sub-layers 30 is disposed and the others of the first sub-layers 31 and 32 are disposed on and after the first one of the first sub-layers 30.

In particular, the first one of the first sub-layers 30 is here disposed at a first external distance "p" close to an outline of the targeted curved geometrical envelope 25.

The first one of the first sub-layers 30 is inside the targeted curved geometrical envelope 25.

The first external distance "p" can for instance be equal to a print resolution distance.

The print resolution distance is determined as a function of print properties of the inkjet print head 6 and of a thickness of the sub-layer 30 to inkjet print.

In this respect, the print properties may comprise an ink material and/or a drop density and/or a drop volume and/or a drop viscosity and/or a drop speed ejection equated to a firing speed.

In addition, it is to be noted that the first layer 17 has a first determined thickness and the first sub-layers 30, 31 and 32 have each a first determined sub-thickness, which is variable or fixed, and equal or different from one to the other.

To be noted that in alternative, the first external distance "p" can be lower or greater than the print resolution distance and can be closer or in contrast remote to the outline of the targeted curved geometrical envelope.

For instance, the first external distance "p" can be determined as a function of a local slope on the targeted curved geometrical envelope to be obtained, in relation to the thickness of the corresponding slice.

The others of the first sub-layers, respectively 31 and 32, are each offset from the first sub-layer immediately below, respectively 30 and 31, by a first determined shifting distance "b" in a first direction inside the targeted curved geometrical envelope 25.

The others of the first sub-layers 31 and 32 are also disposed at a respective second external distance remote to the outline of the targeted curved geometrical envelope 25 and greater than the first distance "b".

In particular, in the embodiment shown in Figure 5, the other first sub-layer 31 is disposed at a second external distance remote to the outline of the targeted curved geometrical envelope 25, including for instance the first determined shifting distance "b" and the print resolution distance "p"; while the other first sub-layer 32 is disposed at a second external distance remote to the outline of the targeted curved geometrical envelope 25, including for instance twice first determined shifting distance "b" and the print resolution distance "p".

Such disposition of the others first sub-layers 31 and 32 offset relative to the first one of sub-layers 30 allows to create some areas temporarily devoid of material when inkjet printing the first layer 17.

In addition, in the embodiment shown in Figure 5, the first one of the second sub-layers 40 is disposed on the first layer 17, and in particular on the first sub-layers 32, and is offset from the first one of the first sub-layers 30 by a second determined shifting distance "a" lower than the first determined shifting distance "b" and in the first direction inside the targeted curved geometrical envelope 25; whereby the first one of the second sub-layers 40 at least partially covers, or even fully covers, the others of the first sub-layers 31 and 32.

It is to be noted that the second shifting distance can also be representative of the local slope on the targeted curved geometrical envelope to be obtained, in relation to the thickness of the corresponding slice.

Such disposition of the first one of the second sub-layers 40 allows to cover at least partially the areas temporarily devoid of material in the first layer 17, when inkjet printing the second layer 17.

The first one of the second sub-layers 40 is disposed at a third external distance close to the outline of the targeted curved geometrical envelope 25, which is here equal to the print resolution distance and thus to the first external distance "p".

The others of the second sub-layers, respectively 41 and 42, are each offset from the second sub-layer immediately below, respectively 40 and 41, by a third determined shifting distance "b"' in the first direction inside the targeted curved geometrical envelope 25.

The others of the second sub-layers 41 and 42 are also disposed at a respective fourth external distance remote to the outline of the targeted curved geometrical envelope 25 and greater than the third determined shifting distance "b"'.

Depending on the values of the fourth external distance, such disposition of the others second sub-layers 41 and 42 offset relative to the first one of sub-layers 40 may allow to smooth the external surface of the ophthalmic device.

It is to be noted that the second layer 17 has a second determined thickness and the second sub-layers 40, 41 and 42 which are superimposed have each a second determined sub-thickness, which is variable or fixed, and also equal or different from one to the other.

The first determined shifting distance "b" and optionally the third determined shifting distance "b"' are here proportional to the second determined shifting distance "a" and are in relation to a respective number of first sub-layers and second sub-layers.

More generally, the first determined shifting distance "b" and optionally the third determined shifting distance "b"' are fixed or are variable for all the others of the first sub-layers 31 and 32, respectively the others of the second sub-layers 41 and 42, depending on numbers and thicknesses of the first sub-layers 31 and 31, respectively second sub-layers 41 and 42, and on the targeted curved geometrical envelope 25.

In case the first determined shifting distance "b" and optionally the third determined shifting distance "b"' are variable for different sub-layers of one layer, the variation is proportional to a thickness of the layer and or to the thickness and/or number of the sub-layer.

For instance, in a particular embodiment, it can be expected that a sum of the first determined shifting distances "b" and a sum of the third determined shifting distances "b"' are each proportional to the thickness of the respective layer and also respectively to the first external distance "p" and to the second determined shifting distance "a".

For instance, the sum of the first determined shifting distances "b" in the first layer can be equal to about 30 times to 100 times the first external distance "p".

Figure 6 is another schematic view showing an alternative embodiment of some layers divided into sub-layers offset ones relative the others.

Figure 6 differs from Figure 5 in that the second layer 17 comprises only two sub-layers 40 and 41 and a third layer 17 comprising three third sub-layers 50, 51 and 52 which are disposed onto the second layer 17, and also in that the second determined shifting distance, noted "c" (and not "a" compared to Figure 5) is lower than the print resolution distance.

In particular, Figure 6 shows a first layer 17 having the three first sub-layers 30-32, a second layer 17 having two second sub-layers 40-41 and a third layer having the three third sub-layers 50-52.

The first layer 17 is referenced "Layer N", the second layer 17 is referenced "Layer N+1", the second layer being disposed onto the first layer, and the third layer 17 is referenced "Layer N+2", the third layer being disposed onto the second layer.

The three first sub-layers 30, 31 and 32 are respectively superimposed and referenced "Sublayer M - Layer N", "Sublayer M+1 - Layer N" and "Sublayer M+2 - Layer N"; the two second sub-layers 40 and 41 are respectively superimposed and referenced "Sublayer M - Layer N+1" and "Sublayer M+1 - Layer N+1", while the three third sub-layers 50, 51 and 52 are respectively superimposed and referenced "Sublayer M - Layer N+2", "Sublayer M+1 - Layer N+2" and "Sublayer M+2 - Layer N+2".

The targeted curved geometrical envelope 25 delimits the ophthalmic device 5.

Similarly to Figure 5, the first one of the first sub-layers 30 is disposed and the others of the first sub-layers 31 and 32 are disposed on and after the first one of the first sub-layers 30.

In particular, the first one of the first sub-layers 30 is disposed at the same first external distance "p" (not referenced) close to an outline of the targeted curved geometrical envelope 25.

The others of the first sub-layers, respectively 31 and 32, are each offset from the first sub-layer immediately below, respectively 30 and 31, by the first determined shifting distance "b" in the first direction inside the targeted curved geometrical envelope 25.

The others of the first sub-layers 31 and 32 are also disposed at the respective second external distance remote to the outline of the targeted curved geometrical envelope 25 and greater than the first distance "b".

This disposition of the others first sub-layers 31 and 32 offset relative to the first one of sub-layers 30 allows to create some areas temporarily devoid of material when inkjet printing the first layer 17.

In addition, the first one of the second sub-layers 40 is disposed on the first layer 17, and in particular on the first sub-layers 32, and is offset from the first one of the first sub-layers 30 by another second determined shifting distance "c" lower than the first determined shifting distance "b"; whereby the first one of the second sub-layers 40 covers the others of the first sub-layers 31 and 32.

As stated above, the second determined shifting distance "c" is lower than the print resolution distance, and can also be proportional to the print resolution distance, in relation to the number of sub-layers, taking into account that the print resolution distance can be as a function of the local slope on the targeted curved geometrical envelope to be obtained, in relation to the thickness of the corresponding slice .

In particular, the second determined shifting distance "c" is comprised between around a tenth and around half of the print resolution distance.

Such disposition of the first one of the second sub-layers 40 allows to cover at least partially the areas temporarily devoid of material in the first layer 17, when inkjet printing the second layer 17, so as to smooth the external surface, and also to be closer to the targeted curved geometrical envelope 25.

The other of the second sub-layers 41 is offset from the second sub-layer immediately below by the third determined shifting distance "b"' which is greater than the second determined shifting distance "c".

In addition, the first one of the third sub-layers 50 is disposed on the second layer 17, and in particular on the "top most" second sub-layers 41, and is offset from the first one of the second sub-layers 40 by a fourth determined shifting distance "c*" which is here equal to the second determined shifting distance "c" and lower than the first determined shifting distance "b"; whereby the first one of the third sub-layers 50 at least partially covers the other of the second sub-layers 41.

In variant, the fourth determined shifting distance "c*" can be lower or greater than the second determined shifting distance "c".

The others of the third sub-layers, respectively 51 and 52, are each offset from the third sub-layer immediately below, respectively 50 and 51, by a fifth determined shifting distance "b"" which is here variable, and greater than the fourth determined shifting distance "c*".

Similarly to the first and second layers, some areas temporarily devoid of material in the second layer 17 are covered by at least the first one of the third sub-layer 50.

Similarly to the above, the first one of the third sub-layers 50 is disposed at a fifth external distance close to the outline of the targeted curved geometrical envelope 25, and the others of the third sub-layers 51 and 52 are also disposed at a respective sixth external distance remote to the outline of the targeted curved geometrical envelope 25.

Figure 7 is a block diagram showing the main steps of the method 100 for additively manufacturing the ophthalmic device, the method 100 being carried out thanks to the manufacturing system 1 as described above.

The method 100 comprises a step of generating and/or providing 101 the manufacturing file representative of the operational parameters, including the images 20 as described above and which are used for the inkjet printing of at least the first and second layers 17 and associated first and second sub-layers 30-32, 40-42.

The manufacturing file may comprise parameters including positioning data of the ophthalmic device 5 and/or of the inkjet print heads 6, which are determined depending on the selected nozzles 15, and parameters including curing characteristics.

It is to be noted that the manufacturing file may comprise several sub-files including one or several of the above-mentioned parameters and data.

The method 100 may further comprise a step of positioning 102 the ophthalmic device 5, thanks to the support member 18, and/or the inkjet print heads 6, one relative to the other and also in relation to the manufacturing axis MA, based on dedicated parameters in the generated and/or provided manufacturing file.

The method 100 further comprises a step of inkjet printing 103 at least the first and second layers 17 and associated first and second sub-layers 30-32, 40-42 of the ophthalmic device 5 on the support member 18, based on dedicated parameters in the generated and/or provided manufacturing file.

The step of inkjet printing 103 the first and second sub-layers 30-32, 40-42 may thus comprise sub-steps of inkjet printing, performed at least partially simultaneously and/or at least partially successively, for instance to make said sub-layers at least partially juxtaposed and/or at least partially superimposed.

In addition, the step of inkjet printing 103 the first and second sub-layers 30-32, 40-42 may be performed with print properties, similar to each other, or different.

The print properties can be fixed or variable during inkjet printing.

The method 100 further comprises a step of curing 104 at least partially the first and second sub-layers 30-32, 40-42, 50-52 of the first, second and third layers 17 of the ophthalmic device 5 based on dedicated parameters in the generated and/or provided manufacturing file.

In particular, in the method according to the disclosure, the step of curing 104 the first layer 17 is made before the step of inkjet printing of the second layer 17, which is made before the step of inkjet printing of the third layer 17 if any.

In addition, all the sub-layers of a layer can be cured as a whole, simultaneously, or successively, before the step of inkjet printing of the second layer 17. The same applies to the second layer relative to the third layer if any.

At least some steps of the method 100 can be performed iteratively. For instance, the position of the support member 18 and/or of the inkjet print heads 6 can change, and/or the curing can be performed after each layer 17 or built, or after several sub-layers, etc.

It is to be noted that the step of curing 104 is carried out thanks to curing parameters which can be similar or different for the distinct layers, and also if the layer is cured as whole or not.

In other words, the curing parameters differ when the layer is cured as a whole compared to when some sub-layers are simultaneously (not as a whole) or successively cured.

Figure 8 describes further steps for generating the manufacturing file according to step 101.

In particular, the method may comprise a step 111 of receiving geometrical characteristics of the ophthalmic device to be additively manufactured, including at least the targeted curved geometrical envelope and characteristics of the layers and/or sub-layers, and/or the associated thickness or sub-thickness of the respective layers and/or sub-layers, and material properties of the droplet material, including ink or resin properties such as viscosity, for the inkjet printing of the layers.

The method may comprise a step 112 of providing and/or determining the inkjet print properties including at least the print head resolution and/or the print resolution distance, in function of the print properties and of the thickness of the layer or sub-layer to inkjet print.

The method may comprise a step 113 of determining shift printing parameters, such as the first to fourth determined shifting distances, at least as a function of the data received in steps 111 and 112.

In particular and for instance, the step 113 of determining shift printing parameters may comprise a step of determining the local slope on the targeted curved geometrical envelope to be obtained, and/or the shifting distances for each "one" of sub-layers and for each "others" of sub-layers (as described above), so as to then fill the areas temporarily void of material in order both to smooth the external surface and to be as close as possible to the targeted curved geometrical envelope, without stair step.

The method may comprise a step 114 of determining and/or deducing at least the first to fourth external distances and/or a number of sub-layers of at least one of the first to third layers 17, at least in function of the respective first to fourth determined shifting distances.

The method may comprise a step 115 of determining the images 20 representative of each of the sub-layers, thanks to the features provided and/or determined in steps 111 to 114.

It is to be noted that the images 20 can be determined directly or by combining a first sub-image representative of the respective layer 17 and determined without taken into consideration the shift printing parameters, and a second sub-image including corrective parameters representative of the shift printing parameters and applied to data of the first sub-image, so that to obtain the network of voxels of the image 20 representative of the distribution of droplets of material for inkjet printing the respective layer 17.

In the method according to the disclosure, at least the others of the first sub-layers and the first one of the second sub-layers are shifted remote to the first one of the first sub-layers, so that first to create some areas temporarily devoid of material when inkjet printing the first layer and next to cover and thus fill at least partially said areas when inkjet printing the second layer. It is the same at least between the second layer and third layer.

In other words, the areas devoid of material are made in the under layer in the vicinity of the targeted curved geometrical envelope where stair steps could be able to be generated if the present method is not carried out, and then the upper layer is able to cover and to at least partially fill the areas generated in the under layer with material, so that no stair step occurs.

In an embodiment, the manufacturing file may comprise further images representative of a distribution of voxels or a distribution of droplets for inkjet printing at least partially further layers or sub-layers of the ophthalmic device and being used for activating and deactivating the at least one nozzle of the at least one inkjet print head.

The further layers may include at least a filtering layer distinct to the at least one curved layer, and having a thickness comprised between 1 µm and 100 µm, so that to act as a levelling layer on the already disposed layers.

Therefore, thanks to the method according to the disclosure, it is possible to provide the ophthalmic device with an external curved surface devoid of stair steps, or with reduced stair steps.

In other words, the method according to the disclosure may allow to smooth the external surface of the ophthalmic device and thus to provide, thanks to the technology of 3D-inkjet printing, an ophthalmic device having an external surface as closest as possible to the targeted curved geometrical envelope and also in accordance to a final external surface, with no stair step or with reduced stair steps at the external surface of the ophthalmic device.

It should be noted more generally that the disclosure is not limited to the examples described and represented.

## Claims

1. Method for additively manufacturing an ophthalmic device (5) delimited by a targeted curved geometrical envelope (25), thanks to at least one inkjet print head (6) having at least one nozzle (15), the method comprising inkjet printing (103) a first layer, the first layer being divided into several first sub-layers (30-32), and inkjet printing a second layer above the first layer, the second layer being divided into several second sub-layers (40-42), wherein a first one of the first sub-layers (30) is disposed and others of the first sub-layers (31-32) are disposed on and after the first one of the first sub-layers and are each offset from the first sub-layer immediately below by a first determined shifting distance (b) in a first direction inside the targeted curved geometrical envelope, and wherein a first one of the second sub-layers (40) is disposed on the first layer and is offset from the first one of the first sub-layers by a second determined shifting distance (a, c) lower than the first determined shifting distance and in the first direction inside the targeted curved geometrical envelope; whereby the first one of the second sub-layers at least partially covers at least one of the others of the first sub-layers.

2. Method according to claim 1, wherein the first determined shifting distance (b) is proportional to the second determined shifting distance (a, c).

3. Method according to one of claims 1 and 2, wherein the first determined shifting distance (b) is fixed or is variable for all the others of the first sub-layers (31, 32), depending on thickness of the first sub-layers and on the targeted curved geometrical envelope (25).

4. Method according to any one of claims 1 to 3, wherein the second determined shifting distance (a, c) is equal to or lower than a print resolution distance (p).

5. Method according to claim 4, wherein the second determined shifting distance (a, c) is comprised between around a tenth and around half of the print resolution distance (p).

6. Method according to one of claims 4 and 5, wherein the print resolution distance (p) is determined as a function of print properties of the at least one inkjet print head (6) and of a thickness of the layer or sub-layer to inkjet print.

7. Method according to any one of claims 1 to 6, wherein the first one of the first sub-layers (30) is disposed at a first external distance close to an outline of the targeted curved geometrical envelope (25) of the ophthalmic device (5), and the others of the first sub-layers (31, 32) are disposed at a second external distance remote to the outline of the targeted curved geometrical envelope and greater than the first distance, the second external distance including at least the first determined shifting distance (b) and the print resolution distance (p).

8. Method according to any one of claims 1 to 7, wherein the first layer comprises a number of others of the first sub-layers (31, 32) offset from the first one of the sub-layers (30), which is determined as a function of the first determined shifting distance (b).

9. Method according to any one of claims 1 to 8, further comprising inkjet printing a third layer having at least one third sub-layer (50-52), wherein others of the second sub-layers (31, 32) are disposed on and after the first one of the second sub-layers (30) and are each offset from the second sub-layer immediately below by a third determined shifting distance (b') in the first direction inside the targeted curved geometrical envelope, the third determined shifting distance being equal to or different to the first determined shifting distance (b), and wherein the at least one third sub-layer (50) is disposed on the second layer and is offset from the first one of the second sub-layers (40) by a fourth determined shifting distance (c*) lower than or equal to the third determined shifting distance (b') and in the first direction inside the targeted curved geometrical envelope (25); whereby the at least one third sub-layer at least partially covers at least one of the others of the second sub-layers (41, 42).

10. Method according to claim 9, wherein the first one of the second sub-layers (40) is disposed at a third external distance close to the outline of the targeted curved geometrical envelope (25) of the ophthalmic device (5), and the others of the second sub-layers (41, 42) are disposed at a fourth external distance remote to the outline of the targeted curved geometrical envelope and greater than the third distance, the fourth external distance including at least the third determined shifting distance (b') and the print resolution distance (p).

11. Method according to any one of claims 1 to 10, comprising curing (104) the first layer as a whole or the first sub-layers at least partially successively, before the inkjet printing of the second layer.

12. Method according to any one of claims 1 to 11, comprising inkjet printing at least a filtering layer onto an outermost layer and having a thickness comprised between 10 µm and 100 µm, so that to act as a leveling layer and to conform closest to the targeted curved geometrical envelope (25).

13. A command and control unit including system elements configured to run a computer program in order to additively manufacture an ophthalmic device (5), thanks to at least one inkjet print head (6) having at least one nozzle (15), by providing a manufacturing file comprising parameters including a plurality of images (20), at least one image being defined by a network of voxels representative of a distribution of droplets of material for inkjet printing of at least partially a first layer divided into several first sub-layers (30-32) and for inkjet printing of at least partially a second layer above the first layer, the second layer being divided into several second sub-layers (40-42), each image being used for activating and deactivating the at least one nozzle of the at least one inkjet print head; wherein a first one of the first sub-layers is disposed and others of the first sub-layers are disposed on and after the first one of the first sub-layers and are each offset from the first sub-layer immediately below by a first determined shifting distance in a first direction inside the targeted curved geometrical envelope, and wherein a first one of the second sub-layers is disposed on the first layer and is offset from the first one of the first sub-layers by a second determined shifting distance lower than the first determined shifting distance and in the first direction inside the targeted curved geometrical envelope; whereby the first one of the second sub-layers at least partially covers at least one of the others of the first sub-layers.

14. A manufacturing system comprising an inkjet printer (2) comprising at least one inkjet print head (6) having at least one nozzle (15) and a command and control unit (3), the system being configured for additively manufacturing an ophthalmic device (5), by providing to the inkjet printer a manufacturing file comprising parameters including a plurality of images (20), at least one image being defined by a network of voxels representative of a distribution of droplets of material for inkjet printing of at least partially a first layer divided into several first sub-layers (30-32) and for inkjet printing of at least partially a second layer above the first layer, the second layer being divided into several second sub-layers (40-42), each image being used for activating and deactivating the at least one nozzle of the at least one inkjet print head; wherein a first one of the first sub-layers is disposed and others of the first sub-layers are disposed on and after the first one of the first sub-layers and are each offset from the first sub-layer immediately below by a first determined shifting distance in a first direction inside the targeted curved geometrical envelope, and wherein a first one of the second sub-layers is disposed on the first layer and is offset from the first one of the first sub-layers by a second determined shifting distance lower than the first determined shifting distance and in the first direction inside the targeted curved geometrical envelope; whereby the first one of the second sub-layers at least partially covers at least one of the others of the first sub-layers.

15. A client-server communication interface for transferring to a remote computer at least a manufacturing file for additively manufacturing an ophthalmic device (5), the manufacturing file being determined by a computer program when said computer program is run in a command and control unit (3a, 3b) of the client-server communication interface (10) and comprising parameters including a plurality of images (20), at least one image being defined by a network of voxels representative of a distribution of droplets of material for inkjet printing of at least partially a first layer divided into several first sub-layers (30-32) and for inkjet printing of at least partially a second layer above the first layer, the second layer being divided into several second sub-layers (40-42), each image being used for activating and deactivating the at least one nozzle of the at least one inkjet print head; wherein a first one of the first sub-layers is disposed and others of the first sub-layers are disposed on and after the first one of the first sub-layers and are each offset from the first sub-layer immediately below by a first determined shifting distance in a first direction inside the targeted curved geometrical envelope, and wherein a first one of the second sub-layers is disposed on the first layer and is offset from the first one of the first sub-layers by a second determined shifting distance lower than the first determined shifting distance and in the first direction inside the targeted curved geometrical envelope; whereby the first one of the second sub-layers at least partially covers at least one of the others of the first sub-layers, and the remote computer being configured to cause a manufacturing system to implement inkjet printing the first layer and the second layer of the ophthalmic device.
